# EUROPEAN PATENT APPLICATION

(11) **EP 3 892 746 A1**
(43) Date of publication of application: **13.10.2021**
(21) Application number: 19893141.2
(22) Date of filing: 14.08.2019
(51) Int. Cl.: C22C 19/00, B22F 1/00, B22F 1/02, H01M 4/38

(54) **HYDROGEN STORAGE MATERIAL, NEGATIVE ELECTRODE AND NICKEL HYDROGEN SECONDARY BATTERY**

(30) Priority: 04.12.2018 JP 2018238862
(71) Applicant: Santoku Corporation, Kobe-shi, Hyogo 658-0013 (JP)
(72) Inventor: OTSUKI, Takayuki, Kobe-shi, Hyogo 658-0013 (JP)
(74) Representative: Beckmann, Claus
(86) International application number: PCT/JP2019/031990
(87) International publication number: WO 2020/115953

(57) **Abstract**

The present invention provides a hydrogen storage material capable of improving the discharge characteristics of a nickel hydrogen secondary battery at low temperatures, and a negative electrode and a nickel hydrogen secondary battery using this hydrogen storage material. This hydrogen storage material contains hydrogen storage alloy particles and a surface modifier attached to the surface of the particles, and has a specific composition. In the X-ray diffraction pattern of this hydrogen storage material, when the relative intensity of the maximum peak Pₘₐₓ among the diffraction peaks appearing in the range of 2θ = 42.00 degrees to 44.00 degrees is set to 100.00%, the relative intensity of the maximum peak P₁ appearing in the range of 28 = 30.35 degrees to 30.65 degrees is from 4.00% to 70.00%, the relative intensity of the maximum peak P₂ appearing in the range of 2θ = 32.85 degrees to 33.15 degrees is less than 60.00%, and the relative intensity of the maximum peak P₃ appearing in the range of 2θ = 51.65 degrees to 51.95 degrees is less than 6.00%.

## Description

### TECHNICAL FIELD

The present invention relates to a hydrogen storage material, and further relates to a negative electrode and a nickel hydrogen secondary battery using the hydrogen storage material.

### BACKGROUND ART

Hydrogen storage alloys are alloys where hydrogen can be reversibly stored and released, have been attracting attention as an energy source in recent years, and should be applicable to various fields.

Hydrogen storage alloys have already been used for negative electrodes of nickel hydrogen secondary batteries. Nickel hydrogen secondary batteries using a hydrogen storage alloy for a negative electrode have a higher energy density than nickelcadmium secondary batteries and do not use harmful cadmium (Cd). Thus, the burden on the environment is small. Such nickel hydrogen secondary batteries are used in portable electronic devices, electric tools, electric vehicles, hybrid vehicles, and so on, and various battery characteristics are required in accordance with their application.

Examples of the known hydrogen storage alloys used for negative electrodes of nickel hydrogen secondary batteries include LaNis-based hydrogen storage alloys (rare earth-Ni-based intermetallic compounds having a CaCus-type crystal structure as a main phase) and Ti-based hydrogen storage alloys (two-element (e.g., TiFe, TiCo, TiMn) alloys and multi-element alloys with other elements added), Zr-based hydrogen storage alloys, or Mg-based hydrogen storage alloys.

In recent years, a rare earth-Mg-Ni-based hydrogen storage alloy, which has a crystal structure other than CaCus-type (e.g., a Ce₂Ni₇-type structure, CeNi₃-type structure), as obtained by adding, for instance, Mg to the above LaNis-based hydrogen storage alloy and adjusting the composition ratio, has been put into practice. Nickel hydrogen secondary batteries using such an alloy for a negative electrode are known to have a high capacity.

As described above, since nickel hydrogen secondary batteries are used for various purposes, the usage environment also ranges from low temperatures to high temperatures. Unfortunately, although the nickel hydrogen secondary batteries using the hydrogen storage alloy for a negative electrode have a higher capacity than nickelcadmium secondary batteries, the problem is that the discharge characteristics at low temperatures are insufficient.

It has been known that the discharge characteristics at low temperatures are improved by increasing the amount of Ni on the surface of the hydrogen storage alloy rather than on the inside. When the amount of Ni on the surface of the alloy is increased, Ni becomes an active site for the charge/discharge reaction. Thus, a negative electrode material having excellent electrochemical catalytic activity can be obtained.

Patent Reference 1 discloses a method including treating a hydrogen storage alloy with a strong acid solution at pH 2.0 or lower and then washing or washing and storing the hydrogen storage alloy with a washing liquid until the residual amount of anions incorporated in the alloy becomes 5 × 10⁻⁶ mol/g or less. In this method, a layer having an excess of metallic Ni and a small amount of rare earth elements is formed on the surface of the alloy.

Patent Reference 2 discloses a surface activation treatment method in which hydrogen storage alloy powder is immersed in an alkaline aqueous solution such as sodium hydroxide (NaOH) and/or potassium hydroxide (KOH) and stirred while heating to perform alkali treatment, and the alloy powder is washed with water to remove the alkaline component and then dehydrated. In this method, some of constituent elements of the alloy powder are eluted in the treatment liquid, and a Ni aggregate layer rich in metallic Ni having high catalytic activity is uniformly formed on the surface of the alloy.

In the methods of Patent References 1 and 2, the above LaNis-based hydrogen storage alloy (a rare earth-Ni-based intermetallic compound having a CaCus-type crystal structure as a main phase) is used as the hydrogen storage alloy. By contrast, Patent Reference 3 discloses a method including treating, with an acidic aqueous solution or an alkaline aqueous solution, a rare earth-Mg-Ni-based hydrogen storage alloy having a crystal structure other than CaCus-type (e.g., a Ce₂Ni₇-type structure, a CeNi₃-type structure) to increase the amount of Ni at or near the surface of the alloy.

Further, Patent Reference 4 discloses a method in which although a treatment target is a V-Cr-Ti-based alloy, which is different from Patent References 1 to 3, the alloy is Ni-plated or Ni-powdered and then heated at a temperature of from 500°C to 1000°C in an inert gas or reduced pressure atmosphere. In addition, Patent Reference 4 discloses a method including mixing Ni powder with particles of the alloy, and physically diffusing Ni by using a mechanical alloying procedure or a mechanical grinding procedure to form a diffusion layer of Ni on the surface of the alloy.

### CITATION LIST

### PATENT LITERATURE

Patent Reference 1: JP-A 2000-285915
Patent Reference 2: JP-A 2007-051366
Patent Reference 3: JP-A 2000-080429
Patent Reference 4: JP-A H11-144728

### SUMMARY OF INVENTION

### TECHNICAL PROBLEM

However, in the acid treatment methods described in Patent References 1 and 3, oxides of rare earth elements present on the surface of the hydrogen storage alloy can be removed, but elements other than Ni are also eluted; and a large difference in Ni abundance between the inside and the surface of the alloy occurs, resulting in a decrease in the electrical catalytic activity of the entire alloy. Thus, further improvement is sought.

In the alkali treatment method described in Patent References 2 and 3, Al, Mn, and/or Co, for instance, present on the surface of the hydrogen storage alloy may be eluted to form a Ni aggregate layer rich in metallic Ni, but rare earth elements remain, as oxides and/or hydroxides, on the surface of the alloy. Further, the oxygen value for the entire alloy becomes high. This results in a decrease in the electrical catalytic activity of the entire alloy.

Although Patent Reference 4 describes a method of mixing a hydrogen storage alloy and Ni powder and heating them, the alloy system is different. The resulting Ni diffusion layer is composed of an intermetallic compound TiNi, and the resulting effect involves an improvement in the capacity and cycle characteristics at 70°C. Further, since the hydrogen storage alloy itself does not contain Ni and only has a Ni diffusion layer on the surface, the electrical catalytic activity is not higher than and the discharge characteristics at low temperatures are inferior to those of the above LaNis-based hydrogen storage alloy and the above rare earth-Mg-Ni-based hydrogen storage alloy also containing Ni inside the alloy.

The purpose of the present invention is to provide a hydrogen storage material capable of improving the low-temperature discharge characteristics in a nickel hydrogen secondary battery.

Another purpose of the present invention is to provide a nickel hydrogen secondary battery exhibiting excellent low-temperature discharge characteristics by using the above hydrogen storage material for a negative electrode.

### SOLUTION TO PROBLEM

An aspect of the present invention provides a hydrogen storage material comprising hydrogen storage alloy particles and a Ni-containing surface modifier attached to a surface of the particles,
the hydrogen storage material having a composition represented by formula (1):

   R₁₋ₐMgₐNi_{b}Al_{c}M_{d} · · · (1)
where R represents at least one element selected from the group consisting of rare earth elements, Zr, Hf, and Ca, M represents at least one element selected from the group consisting of Ti, V, Nb, Ta, Cr, Mo, W, Mn, Fe, Co, Cu, Zn, B, Ga, Sn, Sb, In, C, Si, and P, and a is 0.005 ≤ a ≤ 0.40, b is 3.00 ≤ b ≤ 4.50, c is 0 ≤ c ≤ 0.50, d is 0 ≤ d ≤ 1.00, and b + c + d is 3.00 ≤ b + c + d ≤ 4.50,
wherein in an X-ray diffraction pattern of the hydrogen storage material as obtained by X-ray diffractometry using a Cu-Ka beam as an X-ray source, when a relative intensity of maximum peak Pₘₐₓ among diffraction peaks appearing in a range of 2θ = 42.00 degrees to 44.00 degrees is set to 100.00%, a relative intensity of maximum peak P₁ appearing in a range of 2θ = 30.35 degrees to 30.65 degrees (hereinafter, sometimes referred to as a range at or near 2θ = 30.50 degrees) is from 4.00% to 70.00%, a relative intensity of maximum peak P₂ appearing in a range of 2θ = 32.85 degrees to 33.15 degrees (hereinafter, sometimes referred to as a range at or near 2θ = 33.00 degrees) is less than 60.00%, and a relative intensity of maximum peak P₃ appearing in a range of 2θ = 51.65 degrees to 51.95 degrees is less than 6.00%.

The present invention further provides a negative electrode active material made of the above hydrogen storage material, a negative electrode containing the negative electrode active material, and a nickel hydrogen secondary battery having the negative electrode.

### ADVANTAGEOUS EFFECTS OF INVENTION

A hydrogen storage material of the invention is obtained by appropriately attaching a surface modifier to the surface of specific hydrogen storage alloy particles to exhibit a specific X-ray diffraction pattern. Thus, the hydrogen storage material can be suited for negative electrodes of nickel hydrogen secondary batteries. Each nickel hydrogen secondary battery using the hydrogen storage material according to the invention exhibits excellent low-temperature discharge characteristics.

### BRIEF DESCRIPTION OF DRAWINGS

Fig. 1 is a chart showing X-ray diffraction patterns of hydrogen storage materials in Example 1 and Comparative Example 1.
Fig. 2 is a 10,000x SEM image, under an electron microscope, of the hydrogen storage material in Example 1.
Fig. 3 is a 10,000x SEM image, under an electron microscope, of the hydrogen storage material in Comparative Example 1.

### DETAILED DESCRIPTION

A hydrogen storage material of the invention contains hydrogen storage alloy particles and a surface modifier attached to the surface of the particles. Usually, the hydrogen storage material consists of hydrogen storage alloy particles and a surface modifier. The surface modifier contains Ni, and the composition of the entire hydrogen storage material is represented by formula (1): R₁₋ₐMgₐNi_{b}Al_{c}M_{d}.

In formula (1), R represents at least one element selected from the group consisting of rare earth elements, Zr, Hf, and Ca. Examples of the rare earth elements include Sc, Y, La, Ce, Pr, Nd, Pm, Sm, Eu, Gd, Tb, Dy, Ho, Er, Tm, Yb, and Lu. Use of Y, La, Ce, Pr, Nd, Sm, Gd, Dy, and/or Zr makes it possible to suitably adjust the equilibrium pressure of the hydrogen storage material at the time of hydrogen storage/release, so that R preferably contains at least one element selected from the group consisting of Y, La, Ce, Pr, Nd, Sm, Gd, Dy, and Zr. La tends to decrease the equilibrium pressure, and Y, Ce, Pr, Nd, Sm, Gd, Dy, and Zr tend to increase the equilibrium pressure.

In formula (1), 1-a represents the content ratio of R. Here, 1-a is 0.60 ≤ 1-a ≤ 0.995, preferably 0.70 ≤ 1-a ≤0.99, and more preferably 0.85 ≤ 1-a ≤0.99.

In formula (1), a represents the content ratio of Mg. Here, a is 0.005 ≤ a ≤ 0.40, preferably 0.01 ≤ a ≤ 0.30, and more preferably 0.01 ≤ a ≤ 0.15. If the Mg content ratio is lower than the above range, the hydrogen storage material does not have a sufficient hydrogen storage amount, and the discharge capacity upon use in a secondary battery may decrease. If the Mg content ratio is higher than the above range, the hydrogen storage material does not exhibit sufficient corrosion resistance, and the cycle characteristics upon use in a secondary battery may deteriorate. Mg tends to increase the hydrogen storage amount of the hydrogen storage material and to increase the equilibrium pressure at the time of hydrogen storage/release.

In formula (1), b represents the content ratio of Ni. As described above, the surface modifier contains Ni, but the hydrogen storage alloy particles may also contain Ni, and b represents the content ratio of all the Ni contained in both the surface modifier and the hydrogen storage alloy particles. Here, b is 3.00 ≤ b ≤ 4.50, preferably 3.00 ≤ b ≤ 4.00, and more preferably 3.00 ≤ b ≤ 3.80. If the content ratio of Ni inside the hydrogen storage alloy particles is high, the hydrogen storage material is likely to be pulverized, the corrosion resistance may be lowered, and the cycle characteristics upon use in a secondary battery may be deteriorated. If the content ratio of Ni inside the hydrogen storage alloy particles is low, the discharge performance deteriorates. As a result, a sufficient discharge capacity upon use in a secondary battery cannot be obtained. Meanwhile, the presence of Ni on the surface of the hydrogen storage alloy particles improves the electrical catalytic activity of the entire hydrogen storage material and improves the discharge characteristics at low temperatures. Although Ni contained in the surface modifier attached to the surface of the hydrogen storage alloy particles needs to have a certain content ratio, just how large/small the content ratio is does not contribute to the discharge characteristics at low temperatures. In particular, it is important that Ni contained in the surface modifier does not exist as metallic Ni, but exists as a Ni compound showing an X-ray diffraction pattern described later.

In formula (1), c represents the content ratio of Al. Here, c is 0 ≤ c ≤ 0.50, preferably 0.05 ≤ c ≤ 0.50, and more preferably 0.05 ≤ c ≤ 0.30. Al is not always necessary, but inclusion of Al improves the corrosion resistance of the hydrogen storage material and contributes to an improvement in cycle characteristics upon use in a secondary battery. In addition, Al tends to lower the equilibrium pressure of the hydrogen storage material at the time of hydrogen storage/release, which contributes to an improvement in, for instance, the initial capacity in the case of a secondary battery. Meanwhile, if the amount of Al is too large, a sufficient hydrogen storage amount cannot be obtained. Also, sufficient corrosion resistance is not necessarily obtained due to segregation of Al.

In formula (1), M is any of at least one element other than R, Mg, Ni, and Al, and represents at least one element selected from the group consisting of Ti, V, Nb, Ta, Cr, Mo, W, Mn, Fe, Co, Cu, Zn, B, Ga, Sn, Sb, In, C, Si, and P. As M, any of an element that contributes to fine adjustment of its characteristics may be selected depending on usage of the battery. Preferably, M is at least one element selected from the group consisting of Ti, Nb, Mo, W, Mn, Fe, Co, Cu, B, and Sn. Inclusion of an element selected from the group consisting of, for example, Ti, Nb, Mo, W, Fe, Cu, Sn, and B as M can suppress pulverization of the hydrogen storage material or prevent Al from being eluted into an electrolytic solution.

In formula (1), d represents the content ratio of M. Here, d is 0 ≤ d ≤1.00 and preferably 0 ≤ d ≤ 0.50. M is not always necessary, but can be included if fine adjustment of characteristics is required depending on usage of the battery.

Here, b + c + d in formula (1) represents the total content ratio of elements other than R and Mg. These elements mainly affect pulverization of the hydrogen storage material and contribute to an improvement in cycle characteristics, etc., particularly in the case of a secondary battery. Here, b + c + d is 3.00 ≤ b + c + d ≤ 4.50, preferably 3.00 ≤ b + c + d ≤ 4.00, and more preferably 3.00 ≤ b + c + d ≤ 3.80.

As described above, the hydrogen storage material of the invention usually includes hydrogen storage alloy particles and a surface modifier attached to the surface thereof. That is, the above formula (1) represents the total composition of the hydrogen storage alloy particles and the surface modifier. This composition can be checked by quantification with an ICP (Inductively Coupled Plasma) analyzer.

The X-ray diffraction pattern of a hydrogen storage material in the invention as obtained by X-ray diffractometry using a Cu-Ka beam as an X-ray source is such that when the relative intensity of the maximum peak Pₘₐₓ among the diffraction peaks appearing in the range of 2θ = 42.00 degrees to 44.00 degrees is set to 100.00%, the relative intensity of the maximum peak P₁ appearing in the range of 2θ = 30.35 degrees to 30.65 degrees is from 4.00% to 70.00% and the relative intensity of the maximum peak P₂ appearing in the range of 2θ = 32.85 degrees to 33.15 degrees is less than 60.00%. The relative intensity of the maximum peak P₁ is preferably 5.00% or larger and more preferably 10.00% or larger. In addition, the relative intensity of the maximum peak P₁ is preferably 60.00% or smaller and more preferably 40.00% or smaller. The relative intensity of the maximum peak P₂ is preferably less than 50.00% and more preferably less than 47.00%. The relative intensity of the maximum peak P₂ may be 0.00%, but is usually 10.00% or larger and preferably 14.00% or larger. Since the hydrogen storage material of the invention has relative intensities in the above ranges for both the maximum peaks P₁ and P₂, the electrical catalytic activity of the entire hydrogen storage material is improved and the discharge characteristics at low temperatures are also improved.

It is difficult to identify from which phase a diffraction peak of the maximum peak P₁ is derived, and although not clear, the peak is presumed to be a diffraction peak related to the surface modifier attached to the surface of the hydrogen storage alloy particles. Then, the peak is presumed to be a peak derived from the 1-5 phase and/or the 5-19 phase described later. If the relative intensity of the maximum peak P₁ is less than 4.00%, a surface modifier having electrically catalytic activity may be insufficiently formed on the surface of the hydrogen storage alloy particles, and the discharge characteristics at low temperatures are not necessarily improved. When the relative intensity of the maximum peak P₁ exceeds 70.00%, a surface modifier that is rich in Ni and does not contribute to an improvement in the electrical catalytic activity is formed. As a result, the corrosion resistance may be lowered and the cycle characteristics at low temperature may also be deteriorated. In the above X-ray diffraction pattern, only one diffraction peak in the range of 2θ = 30.35 degrees to 30.65 degrees may appear. In this case, this diffraction peak is regarded as the maximum peak P₁. If a plurality of diffraction peaks appear in this range, the peak having the highest relative intensity among these diffraction peaks is regarded as the maximum peak P₁.

It is also difficult to identify from which phase a diffraction peak of the maximum peak P₂ is derived, and although not clear, the peak is presumed to be derived from the 2-7 phase described later. If the relative intensity of the maximum peak P₂ is 60.00% or larger, a surface modifier having electrical catalytic activity is insufficiently formed on the surface of the hydrogen storage alloy particles, which state is close to the original hydrogen storage alloy particles. As a result, the discharge characteristics at low temperatures are not necessarily improved. Note that in the above X-ray diffraction pattern, if there is no diffraction peak in the range of 2θ = 32.85 degrees to 33.15 degrees, the relative intensity of the maximum peak P₂ is 0.00%. If just one diffraction peak appears in this range, the diffraction peak is regarded as the maximum peak P₂. If a plurality of diffraction peaks appear in this range, the peak having the highest relative intensity among these diffraction peaks is regarded as the maximum peak P₂.

The X-ray diffraction pattern of a hydrogen storage material in the invention as obtained by X-ray diffractometry using a Cu-Ka beam as an X-ray source is such that when the relative intensity of the maximum peak Pₘₐₓ among the diffraction peaks appearing in the range of 2θ = 42.00 degrees to 44.00 degrees is set to 100.00%, the relative intensity of the maximum peak P₃ appearing in the range of 2θ = 51.65 degrees to 51.95 degrees (hereinafter, sometimes referred to as a range at or near 2θ = 51.80 degrees) is less than 6.00% and preferably less than 5.00%. The maximum peak P₃ is presumed to be derived from metallic Ni. If the relative intensity of the maximum peak P₃ is 6.00% or larger, the surface modifier does not become a Ni compound and remains as metallic Ni on the surface of the hydrogen storage alloy particles. Since the surface modifier does not have electrochemical catalytic activity, the discharge characteristics at low temperatures are not necessarily improved. If there is no diffraction peak in the range of 2θ = 51.65 degrees to 51.95 degrees, the relative intensity of the maximum peak P₃ is 0.00%. If just one diffraction peak appears in this range, the diffraction peak is regarded as the maximum peak P₃. If a plurality of diffraction peaks appear in this range, the peak having the highest relative intensity among these diffraction peaks is regarded as the maximum peak P₃.

In the above-mentioned X-ray diffractometry, a powder X-ray diffractometer (Ultima IV, manufactured by Rigaku Corporation) was used under conditions in which the target was copper, the tube voltage was at 40 kV, the tube current was at 40 mA, the 2/3-degrees divergence slit was used, the 8-mm scattering slit was used, the 0.15-mm light receiving slit was used, the operation mode was continuous, and the scan speed was 2.5 degrees/min.

The surface modifier contains Ni and preferably contains a Ni compound. The surface modifier may essentially consist of one or more Ni compounds. The surface modifier is presumed to form, as a main phase, any of the following: a MgZn₂-type crystal structure and a MgCu₂-type crystal structure (hereinafter, sometimes referred to as the 1-2 phase without distinguishing the two structures); a CeNi₃-type crystal structure and a PuNi₃-type crystal structure (hereinafter, sometimes referred to as the 1-3 phase without distinguishing the two structures); a Ce₂Ni₇-type crystal structure and a Gd₂CO₇-type crystal structure (hereinafter, sometimes referred to as the 2-7 phase without distinguishing the two structures); a Ce₅Ni₁₉-type crystal structure and a Pr₅Co₁₉-type crystal structure (hereinafter, sometimes referred to as the 5-19 phase without distinguishing the two structures); a CaCus-type crystal structure (hereinafter, sometimes abbreviated as the 1-5 phase); or a crystal structure similar to the above. The hydrogen storage alloy particles alone or the hydrogen storage material free of any specific surface modifier in the invention does not show a peak at or near 2θ = 30.50 degrees, or has only small peaks outside the predetermined relative intensity range. By contrast, the hydrogen storage material of the invention shows a peak having a predetermined relative intensity within this range. In view of this, the peak in the range at or near 2θ = 30.50 degrees is speculated to be a peak related to the surface modifier. In the range at or near 2θ = 30.50 degrees, peaks presumed to be derived from the 1-5 phase and/or the 5-19 phase appear. Thus, the surface modifier is speculated to be rich in the 1-5 phase and/or the 5-19 phase among the above-mentioned main phases.

The surface modifier is present on the entire or part of the surface of the hydrogen storage alloy particles. The presence of the surface modifier on at least part of the surface of the hydrogen storage alloy particles improves the electrochemical catalytic activity of the entire hydrogen storage material, thereby the moving of hydrogen between the surface modifier and the inside of the hydrogen storage alloy particles is smooth. Thus, the discharge characteristics at low temperatures are improved. This is because the hydrogen storage alloy particles contain a certain amount of Ni and the state of Ni in the surface modifier satisfies the above-mentioned predetermined conditions. This causes smoother hydrogen movement, and may be one of factors to improve the discharge characteristics at low temperatures. Note that as used herein, "the surface modifier attached to the surface of the hydrogen storage alloy particles" means that the surface modifier is in contact with and held on the surface. The surface modifier may be adsorbed or adhered to the surface, or the surface modifier may be chemically bonded to the surface. On the surface, the hydrogen storage alloy particles and the surface modifier may be alloyed.

The hydrogen storage alloy particles preferably have a composition represented by formula (2): R_{1-w}Mg_{w}NiₓAl_{y}M_{z}. The composition of the hydrogen storage alloy particles can be checked by quantification in substantially the same manner as for the hydrogen storage material. Note that as described below, the hydrogen storage material of the invention can be produced by attaching the surface modifier to the surface of the hydrogen storage alloy particles. In this attachment process, the surface modifier may be chemically bonded to the surface of the hydrogen storage alloy particles, or the surface of the hydrogen storage alloy particles and the surface modifier may be alloyed. In such a case, it is very difficult and practically impossible to strictly identify the composition of only the hydrogen storage alloy particles in the hydrogen storage material. However, it is considered that a change in the composition of the hydrogen storage alloy particles during the attachment process is negligibly small. Thus, in the invention, the composition of the hydrogen storage alloy particles in the hydrogen storage material is considered to be the same as the composition of the hydrogen storage alloy particles at the stage before the surface modifier is attached. That is, the composition of the hydrogen storage alloy particles is regarded as unchanged before and after the attachment process. Hence, the hydrogen storage alloy particles at the stage before the surface modifier is attached also preferably have the composition represented by the above formula (2).

In formula (2), R represents at least one element selected from the group consisting of rare earth elements, Zr, Hf, and Ca. Examples of the rare earth elements include Sc, Y, La, Ce, Pr, Nd, Pm, Sm, Eu, Gd, Tb, Dy, Ho, Er, Tm, Yb, and Lu. Use of Y, La, Ce, Pr, Nd, Sm, Gd, Dy, and/or Zr makes it possible to suitably adjust the equilibrium pressure of the hydrogen storage material at the time of hydrogen storage/release, so that R preferably contains at least one element selected from the group consisting of Y, La, Ce, Pr, Nd, Sm, Gd, Dy, and Zr. La tends to lower the equilibrium pressure, and Y, Ce, Pr, Nd, Sm, Gd, Dy, and Zr tend to increase the equilibrium pressure.

In formula (2), 1-w represents the content ratio of R. Here, 1-w is 0.60 ≤ 1-w ≤ 0.995, preferably 0.70 ≤ 1-w ≤ 0.99, and more preferably 0.85 ≤ 1-w ≤ 0.99.

In formula (2), w represents the content ratio of Mg. Here, w is 0.005 ≤ w ≤ 0.40, preferably 0.01 ≤ w ≤ 0.30, and more preferably 0.01 ≤ w ≤ 0.15. If the Mg content ratio is lower than the above range, the hydrogen storage material does not have a sufficient hydrogen storage amount, and the discharge capacity upon use in a secondary battery may decrease. If the Mg content ratio is higher than the above range, the hydrogen storage material does not exhibit sufficient corrosion resistance, and the cycle characteristics upon use in a secondary battery may deteriorate. Mg tends to increase the hydrogen storage amount of the hydrogen storage material and to increase the equilibrium pressure at the time of hydrogen storage/release.

In formula (2), x represents the content ratio of Ni. Here, x is 2.70 ≤ x ≤ 4.20, preferably 2.70 ≤ x ≤ 3.80, and more preferably 2.70 ≤ x ≤ 3.60. If the content ratio of Ni inside the hydrogen storage alloy particles is high, the hydrogen storage material is likely to be pulverized, the corrosion resistance may be lowered, and the cycle characteristics upon use in a secondary battery may be deteriorated. If the content ratio of Ni inside the hydrogen storage alloy particles is low, the discharge performance deteriorates. As a result, a sufficient discharge capacity upon use in a secondary battery cannot be obtained. Meanwhile, the presence of Ni on the surface of the hydrogen storage alloy particles improves the electrical catalytic activity of the entire hydrogen storage material and improves the discharge characteristics at low temperatures.

In formula (2), y represents the content ratio of Al. Here, y is 0 ≤ y ≤ 0.50, preferably 0.05 ≤ y ≤ 0.50, and more preferably 0.05 ≤ y ≤ 0.30. Al is not always necessary, but inclusion of Al improves the corrosion resistance of the hydrogen storage material and contributes to an improvement in cycle characteristics upon use in a secondary battery. In addition, Al tends to lower the equilibrium pressure of the hydrogen storage material at the time of hydrogen storage/release, which contributes to an improvement in, for instance, the initial capacity in the case of a secondary battery. Meanwhile, if the amount of Al is too large, a sufficient hydrogen storage amount cannot be obtained. Also, sufficient corrosion resistance is not necessarily obtained due to segregation of Al.

In formula (2), M is any of at least one element other than R, Mg, Ni, and Al, and represents at least one element selected from the group consisting of Ti, V, Nb, Ta, Cr, Mo, W, Mn, Fe, Co, Cu, Zn, B, Ga, Sn, Sb, In, C, Si, and P. As M, any of an element that contributes to fine adjustment of its characteristics may be selected depending on usage of the battery. Preferably, M is at least one element selected from the group consisting of Ti, Nb, Mo, W, Mn, Fe, Co, Cu, B, and Sn. Inclusion of an element selected from the group consisting of, for example, Ti, Nb, Mo, W, Fe, Cu, Sn, and B as M can suppress pulverization of the hydrogen storage material or prevent Al from being eluted into an electrolytic solution.

In formula (2), z represents the content ratio of M. Here, z is 0 ≤ z ≤ 1.00 and preferably 0 ≤ z ≤ 0.50. M is not always necessary, but can be included if fine adjustment of characteristics is required depending on usage of the battery.

Here, x + y + z in formula (2) represents the total content ratio of elements other than R and Mg. These elements mainly affect pulverization of the hydrogen storage material and contribute to an improvement in cycle characteristics, etc., particularly in the case of a secondary battery. Here, x + y + z is 2.70 ≤ x + y + z ≤ 4.20, preferably 2.70 ≤ x + y + z ≤ 3.80, and more preferably 2.70 ≤ x + y + z ≤ 3.60.

Next, a method of preparing hydrogen storage alloy particles and a method of attaching a surface modifier to the surface of the particles, that is, a process for producing a hydrogen storage material of the invention will be described.

The method of preparing hydrogen storage alloy particles is not particularly limited, and a known method may be selected. Examples include strip casting such as a single-roll process, a twin-roll process, or a disc process, or mold casting. Further, the method disclosed in Japanese Patent No. 5856056, which is a process for producing hydrogen storage alloy particles having a concentration gradient in which the concentration of Mg contained in the hydrogen storage alloy particles gradually decreases from the outer surface to the center of the alloy particles, may be used. From the viewpoint of more easily achieving the effects of the invention, the method in this patent is preferably used.

In strip casting, raw materials blended so as to have a predetermined alloy composition are provided. Next, in an inert gas atmosphere, the blended raw materials are heated and melted to form an alloy melt, and the alloy melt is then poured into a copper-made, water-cooled roll and rapidly cooled and solidified to obtain an alloy cast slab. By contrast, in mold casting, the alloy melt obtained by the above procedure is poured into a water-cooled copper mold and cooled and solidified to obtain an ingot. The strip casting and the mold casting have different cooling rates. Here, in the case of producing an alloy with less segregation and uniform composition distribution, the strip casting is preferable. In addition, to make an alloy with less segregation and uniform composition distribution, heat treatment may be conducted.

In the method described in Japanese Patent No. 5856056, hydrogen storage alloy particles are produced by step (A) of preparing alloy powder at least free of Mg and, in addition to the method of producing alloy powder free of Mg, step (B) of preparing metallic Mg or Mg-containing alloy powder, step (C) of mixing the powders prepared in steps (A) and (B), step (D) of heating the resulting mixture, and step (E) of disintegrating or crushing the heat-treated alloy powder.

Step (A) is performed by a known procedure. Examples thereof include strip casting or mold casting. Preferred is strip casting in which an alloy with less segregation and uniform composition distribution can be obtained. Next, the alloy obtained by casting is crushed to obtain alloy powder. The crushing can be performed using a known crusher. In order to smoothly diffuse and react Mg with this Mg-free alloy powder in the heat treatment step (D) described later, the alloy powder preferably has an average particle size (D50) of from 20 to 100 µm. The average particle size (D50) of the powder at this time may be measured by, for example, a laser diffraction/scattering particle size distribution measuring device (trade name "Microtrack MT3300EXII, manufactured by Nikkiso Co., Ltd. (currently MICROTRACK MRB)).

In step (B), the metallic Mg powder can be produced by pulverizing a Mg base metal using a known crusher. The Mg-containing alloy powder can be produced in substantially the same manner as for the Mg-free alloy. In order to prevent evaporation of Mg in the heat treatment step (D) described later, it is preferable that the melting point of the Mg-containing alloy is as low as possible below the boiling point of the metallic Mg. Examples of the element used in combination with the metallic Mg include at least one kind selected from the group consisting of Al, Cu, Zn, Ga, Sn and In. Particularly preferred are Mg-Al alloy, Mg-In alloy, or Mg-Zn alloy, the melting point of which is equal to or lower than the melting point of the metallic Mg. Examples of R used in combination with the metallic Mg include La, Ce, Pr, Nd, Sm, Mm (mischmetal) containing them, Y, Eu, or Yb. In order to smoothly diffuse and react Mg with the Mg-free alloy powder in the heat treatment step (D) described later, the metallic Mg or Mg-containing alloy powder preferably has an average particle size (D50) of preferably from 20 to 2000 µm and more preferably from 20 to 1500 µm. The average particle size (D50) of the powder at this time may be measured by substantially the same procedure as for the Mg-free alloy powder.

In step (C), the Mg-free alloy powder and the metallic Mg or Mg-containing alloy powder as prepared in step (A) and (B) are mixed and formulated so as to have a desired composition of hydrogen storage alloy particles. In order to efficiently diffuse and react Mg in the heat treatment step (D) described later, it is preferable to keep the mixed state as uniform as possible. The mixing can be performed using a known mixer. Examples of the mixer used include a rotary mixer such as a double cone or V type or a stirring mixer such as a blade type or a screw type. It is also possible to use a crusher such as a ball mill or an attritor mill to pulverize and mix the Mg-free alloy powder and the metallic Mg or Mg-containing alloy powder. The diffusion/reaction of Mg in the below-described step (D) may usually be carried out at a relatively low temperature of from 400 to 1090°C. Because of this, components such as Mg are less evaporated, but strictly speaking, in consideration of the yield of each component, the Mg-free alloy powder and the metallic Mg or Mg-containing alloy powder are blended to obtain an alloy with a desired composition.

In step (D), the resulting mixture is heated preferably at 400 to 1090°C for 0.5 to 240 hours. This heat treatment step may be performed in a known heat treatment furnace, the atmosphere of which is controllable. At that time, the heat treatment can be performed while the mixture is mixed. For instance, a rotary furnace such as a rotary kiln furnace may be used. At this time, Mg from the metallic Mg or Mg-containing alloy powder can diffuse into the inside of the Mg-free alloy powder and then react to yield hydrogen storage alloy particles. The heat treatment temperature at this time is preferably a temperature and time at which evaporation of Mg is suppressed and the diffusion/reaction easily proceeds. The heat treatment temperature is particularly preferably from 500 to 1080°C. In addition, the heat treatment time is particularly preferably from 1 to 24 h. Since Mg is easily oxidized, the heat treatment is preferably performed in vacuum or in an inert gas atmosphere. The heat treatment is more preferably performed in an inert gas pressurized atmosphere. In this case, oxidation of Mg can be prevented and evaporation can be suppressed at the same time.

The heat treatment in step (D) may be performed in two or more steps in the range of from 400 to 1090°C. For instance, the metallic Mg or Mg-containing alloy powder may be retained in a temperature range slightly exceeding the melting point, the temperature is raised, and the powder is then retained in a higher temperature range. In this way, the above-mentioned diffusion/reaction can be performed more uniformly. This makes it possible to produce hydrogen storage alloy particles having a concentration gradient in which at least the concentration of Mg decreases gradually from the outer surface to the center of the resulting hydrogen storage alloy particles. The above two-step heat treatment can be carried out, for instance, at 660 to 750°C for 0.1 to 2.0 h and then at 900 to 1090°C for 4 to 24 h.

In step (E), the heat-treated alloy powder may be disintegrated or crushed to obtain hydrogen storage alloy particles. The disintegration or crushing is preferably performed such that the resulting hydrogen storage alloy particles have an average particle size (D50) of from 20 to 100 µm. The disintegration or crushing procedure may be carried out using a known crusher such as a feather mill, a hammer mill, a ball mill, or an attritor mill while the crushing conditions are changed, if appropriate.

In the invention, the method includes step (1) of mixing hydrogen storage alloy particles and a surface modifier precursor to obtain a mixture, step (2) of heat-treating the mixture to obtain a heat-treated material, and step (3) of disintegrating or crushing the heat-treated material. In this way, a surface modifier can be attached to the surface of the hydrogen storage alloy particles to produce a hydrogen storage material. Ni powder may be used as the surface modifier precursor. In the invention, the surface modifier may be attached to the hydrogen storage alloy particles under specific conditions to produce a hydrogen storage material having a specific composition distribution and an attachment state. Although it is difficult to specify the specific composition distribution and attachment state of the invention in a numerical range other than the X-ray diffraction peak intensities, the below-described Examples have clearly demonstrated that an effect of improving discharge characteristics in a secondary battery can be exerted by achieving the specific composition distribution and attachment state under specific conditions.

In step (1), hydrogen storage alloy particles and a surface modifier precursor are mixed at a predetermined ratio to prepare a mixture. In order to improve discharge characteristics at low temperatures, it is preferable to make the mixed state as uniform as possible. The mixing may be conducted by a known procedure. For instance, the mixing may be performed on a mortar, or using a double cone or V-type rotary mixer, a stirring mixer such as a blade type or a screw type, or the like. In addition, the hydrogen storage alloy particles and the surface modifier precursor may be crushed and mixed using a crusher such as a ball mill or an attritor mill.

If Ni powder is used as the surface modifier precursor, the average particle size (D50) of the Ni powder is preferably from 0.05 µm to 5.00 µm, more preferably from 0.05 µm to 3.00 µm, still more preferably from 0.10 µm to 2.50 µm, and particularly preferably from 0.50 µm to 2.50 µm. This average particle size (D50) may be measured in substantially the same manner as in the Mg-free alloy powder.

In the case of using Ni powder as the surface modifier precursor in step (1), it is preferable to use the Ni powder in an amount of from 0.6 parts by mass to 6.0 parts by mass with respect to 100 parts by mass of the hydrogen storage alloy particles. The mixing amount of the Ni powder is more preferably from 0.6 parts by mass to 5.0 parts by mass and particularly preferably from 0.8 parts by mass to 5.0 parts by mass. If this mixing amount is less than 0.6 parts by mass, the amount of surface modifier attached to the surface of the hydrogen storage alloy particles is reduced. As a result, insufficient electrical catalytic activity may be obtained, and the discharge characteristics at low temperatures are thus not necessarily improved. If the mixing amount exceeds 6.0 parts by mass, the capacity of the entire alloy may be lowered, the corrosion resistance may also be lowered, and the cycle characteristics may be deteriorated.

In step (2), the mixture obtained in step (1) is heat-treated to obtain a heat-treated material. The heat treatment temperature is preferably from 550°C to 950°C and more preferably from 600°C to 850°C. The heat treatment time is preferably from 1 h to 24 h, more preferably from 1 h to 10 h, still more preferably from 2 h to 6 h, and particularly preferably from 2 h to 5 h. If the heat treatment temperature is less than 550°C, a surface modifier having electrical catalytic activity cannot be formed on the surface of the hydrogen storage alloy particles. As a result, the discharge characteristics at low temperatures are not necessarily improved. If the heat treatment is performed at a heat treatment temperature exceeding 950°C, a phase different from the desired phase grows. As a result, the overall phase ratio is not maintained and a surface modifier having electrical catalytic activity cannot be formed. In addition, no Ni remains on the surface of the hydrogen storage alloy particles and Ni diffuses even into the inside of the particles. This causes a decrease in corrosion resistance of the entire hydrogen storage material, and the cycle characteristics may thus be deteriorated. The heat treatment may be performed by a method or equipment capable of controlling the atmosphere, and the atmosphere for performing the heat treatment is preferably in vacuum or an inert gas atmosphere. More preferably, the method is carried out in an inert gas pressurized atmosphere, but the heat treatment procedure is not particularly limited as long as a desired hydrogen storage material can be obtained.

The combination of the amount of surface modifier precursor mixed in step (1) and the heat treatment conditions in step (2) may be selected, if appropriate, in accordance with the composition of the hydrogen storage alloy particles to adjust the above-mentioned relative intensities of the maximum peaks P₁, P₂, and P₃ within the above given ranges.

In step (3), the heat-treated material obtained in step (2) may be disintegrated or crushed to obtain a hydrogen storage material. The disintegration or crushing is preferably performed such that the hydrogen storage material has an average particle size (D50) of from 20 to 100 µm. The disintegration or crushing may be performed using a crusher such as a feather mill, a hammer mill, a ball mill, or an attritor mill while the crushing conditions are changed, if appropriate.

A hydrogen storage material of the invention is applicable to a negative electrode active material for a nickel hydrogen secondary battery. The negative electrode in the invention contains a negative electrode active material made of this hydrogen storage material. In this negative electrode, the content ratio of the hydrogen storage material, which is a negative electrode active material, is preferably 80% by mass or higher and more preferably 95% by mass or higher with respect to the total amount of materials other than a current collector including, for instance, a conducting agent and a binder.

Any known conducting agent may be used, and examples thereof include carbon black such as acetylene black or furnace black, carbonic material such as graphite, copper, nickel, or cobalt.

Any known binder may be used and examples thereof include carboxymethyl cellulose, polyvinyl alcohol, polyvinyl butyral, polyvinylpyrrolidone, polyethylene oxide, polytetrafluoroethylene (PTFE), or 4-ethylene fluoride-6-propylene fluoride copolymer (FEP).

Examples of the material for the current collector that can be used include a punching metal or a foamed metal. Usually, the negative electrode for a nickel hydrogen secondary battery is produced by what is called a pasting process. Thus, a punching metal is used. The paste-type negative electrode is produced by optionally adding, for instance, a conducting agent, an antioxidant, a surfactant, and/or a thickener to a hydrogen storage material of the invention and the above-mentioned binder, mixing them with water as a solvent to prepare a paste, applying, loading, and drying this paste onto a current collector, and then subjecting the current collector to roller pressing, etc.

If necessary, a water-repellent layer, a conductive layer, or the like may be formed on the surface of the negative electrode in the invention. These layers may be formed by known procedures. The water-repellent layer may be formed by applying, for instance, a fluororesin dispersion and drying it, and the conductive layer may be formed by, for instance, plating.

A nickel hydrogen secondary battery in the invention includes the negative electrode in the invention. Known configurations may be used for other configurations.

The shape of the nickel hydrogen secondary battery may be various shapes such as cylindrical, layered, and coin shapes. Regardless of the shape, the nickel hydrogen secondary battery can be produced by storing a group of electrodes obtained by layering a negative electrode, a separator, and a positive electrode in a can body made of, for instance, stainless steel. In the case of a cylindrical shape, the can body is usually used as the negative electrode terminal. Thus, the electrode group is spirally wound while the negative electrode is placed on the outside, and is then inserted into the can body so as to connect the negative electrode and the negative electrode terminal. The positive electrode is usually connected to a positive electrode terminal by using a lead.

Examples of the material for the separator that can be used include a polymer fiber non-woven fabric made of nylon, polypropylene, or polyethylene or a porous polymer film made of, for instance, polyethylene or polypropylene.

The positive electrode usually contains a nickel oxide, and for instance, a non-sintered nickel electrode may be used. The non-sintered nickel electrode may be produced by mixing nickel hydroxide as well as optionally added cobalt hydroxide, cobalt monoxide, or metallic cobalt, etc., together with a binder while water is used as a solvent to form a paste, loading this paste into a current collector such as a foamed metal, and then drying and subjecting it to roller pressing.

Here, 6 to 8 N potassium hydroxide solution may be injected, as an alkaline electrolytic solution, into a container housing the electrode group. For instance, lithium hydroxide or sodium hydroxide may be added to the alkaline electrolytic solution. Usually, the container is provided with a gasket for hermetically sealing the battery and/or a safety valve configured to operate when the pressure inside the battery rises.

### EXAMPLES

Hereinafter, the invention will be described in detail with reference to Examples and Comparative Examples. However, the invention is not limited to them.

### Example 1

In order to prepare hydrogen storage alloy particles having the composition designated in Table 1, component raw materials other than Mg were first weighed and dissolved in a high-frequency melting furnace under an argon gas atmosphere to prepare an alloy melt. Subsequently, after the pouring temperature was set to 1400°C, this alloy melt was rapidly cooled and solidified by strip casting with a single roll casting device using a copper-made, water-cooled roll to produce an alloy slab having an average thickness of 0.35 mm. The resulting alloy slab was pulverized using a ball mill to obtain particulate alloy powder having an average particle size (D50) of 75 µm. When the resulting alloy powder was analyzed by ICP, the composition was La_{0.14}Sm_{0.80}Zr_{0.02}Ni_{3.26}Al_{0.24}.

The above alloy powder and metallic Mg powder having an average particle size (D50) of 110 µm were mixed well in a mortar, retained at 700°C for 30 min in an argon gas atmosphere, heated to 970°C, and then retained for 12 h. When the resulting alloy powder was analyzed by ICP, the composition was La_{0.14}Sm_{0.80}Zr_{0.02}Mg_{0.04}Ni_{3.26}Al_{0.24}. The heat-treated alloy powder was then pulverized to yield hydrogen storage alloy particles having an average particle size (D50) of 37 µm .

The resulting hydrogen storage alloy particles and Ni powder having an average particle size (D50) of 0.6 µm were well mixed in a mortar and retained at 650°C for 3 h in an argon gas atmosphere to obtain a heat-treated material. The amount of the Ni powder per 100 parts by mass of the hydrogen storage alloy particles was 1.5 parts by mass. The resulting heat-treated material was crushed to obtain a hydrogen storage material having an average particle size (D50) of 37 µm. When the resulting hydrogen storage material was analyzed by ICP, the composition was La_{0.14}Sm_{0.80}Zr_{0.02}Mg_{0.04}Ni_{3.35}Al_{0.24}.

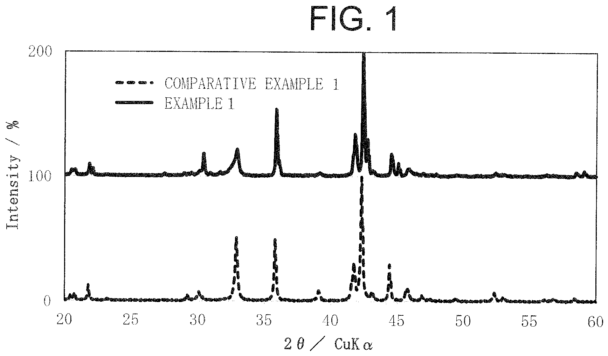

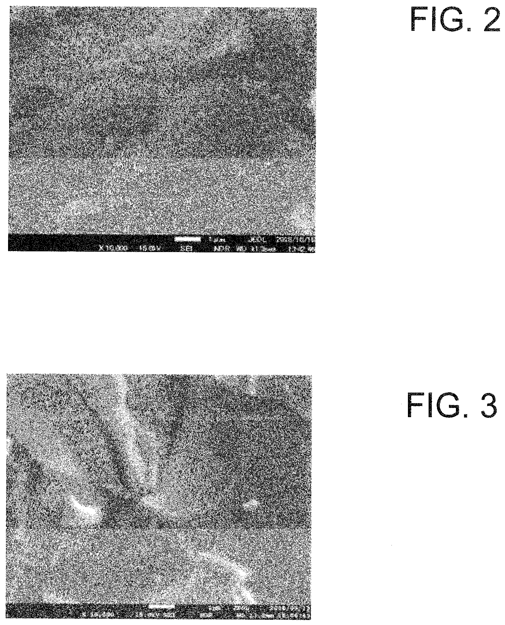

The above hydrogen storage material was subjected to X-ray diffractometry using a Cu-Ka beam as an X-ray source to obtain an X-ray diffraction pattern. In this X-ray diffraction pattern, the relative intensity of the maximum peak Pₘₐₓ in the range of 2θ = 42.00 degrees to 44.00 degrees was set to 100.00%. At this time, the relative intensity of the maximum peak P₁ appearing in the range of 2θ = 30.35 degrees to 30.65 degrees, the relative intensity of the maximum peak P₂ appearing in the range of 2θ = 32.85 degrees to 33.15 degrees, and the relative intensity of the maximum peak P₃ appearing in the range of 2θ = 51.65 degrees to 51.95 degrees were calculated. Table 1 shows the composition of the hydrogen storage material, the composition of the hydrogen storage alloy particles, the amount of the Ni powder, and the heat treatment conditions. Table 3 shows the relative intensities of the maximum peaks P₁, P₂, and P₃. Further, Fig. 1 shows the X-ray diffraction pattern of the hydrogen storage material in Example 1, and Fig. 2 shows a 10,000x SEM image under an electron microscope (trade name: JXA8800, manufactured by JEOL Ltd.).

### -Battery Characteristic Evaluation Test-

The battery characteristics of the hydrogen storage material obtained were measured as follows. Table 3 shows the results of the battery characteristic evaluation test.

### (Room-Temperature Discharge Capacity)

First, 0.15 g of hydrogen storage material and 0.45 g of carbonyl nickel powder were mixed well in a mortar, and the resulting mixture was pressure-pressed at 2000 kgf/cm² to prepare a pellet having a diameter of 10 mm. Next, the pellet was sandwiched between nickel wire meshes, the periphery was spot-welded and pressure welded, and a nickel lead was further spot-welded to the wire meshes to prepare a negative electrode. The negative electrode obtained was immersed in 8 N KOH aqueous solution together with a sintered nickel electrode, which was a counter electrode, and a charge/discharge cycle test was performed at room temperature (25°C). For charging and discharging, a charging/discharging device (trade name BS2500-05R1, manufactured by KEISOKUKI CENTER CO., LTD.) was used; a current of 150 mA per g of hydrogen storage material was used for charging over 170 min; after 10-min rest, a current of 150 mA per g of hydrogen storage material was used for discharging until the voltage to the mercury oxide electrode reached -0.7 V; and this cycle was repeated 15 times, and the maximum discharge capacity at this time was defined as the room-temperature discharge capacity of the hydrogen storage material.

### (Low-Temperature Discharge Capacity)

Following the measurement of the room-temperature discharge capacity, the low-temperature discharge capacity was measured. A current of 150 mA per g of hydrogen storage material at room temperature (25°C) was used for charging over 170 min; after 10-min rest, the hydrogen storage material was cooled to a low temperature (-30°C), and left for 5 h. Then, a current of 150 mA per g of hydrogen storage material was used for discharging until the voltage to the mercury oxide electrode reached -0.7 V. The discharge capacity at this time was defined as the low-temperature discharge capacity of the hydrogen storage material.

### (Cycle Characteristics)

Following the measurement of the low-temperature discharge capacity, the cycle characteristics were measured. In this measurement, the discharge capacity of the hydrogen storage material that has once been in the low temperature (-30°C) state during the above low-temperature discharge capacity measurement is measured after the temperature is returned to room temperature (25°C).This can determine the adaptability to an environmental change, in other words, the durability. In the invention, the low-temperature discharge characteristics are evaluated, including both the low-temperature discharge capacity and the cycle characteristics. At room temperature (25°C), a current of 300 mA per g of hydrogen storage material was used for charging over 90 min; after 10-min rest, a current of 300 mA per g of hydrogen storage material was used for discharging until the voltage to the mercury oxide electrode reached -0.7 V; and this cycle was repeated 100 times. Based on the maximum discharge capacity during the cycles (17th to 116th cycles including the above-mentioned room-temperature discharge capacity measurement and low-temperature discharge capacity measurement) and the discharge capacity at cycle 116, the cycle characteristics were defined as the following formula. Cycle characteristics (%) = (Discharge capacity at cycle 116 / Maximum discharge capacity during cycles) × 100.

Note that the cycle characteristics at room temperature after the state was once at a low temperature as calculated above may be less than 85%. In this case, the hydrogen storage material has poor low-temperature discharge characteristics (durability), and is thus not suitable for use at low temperatures. The cycle characteristics are preferably 87% or higher and more preferably 90% or higher. If the cycle characteristics are 90% or higher, it can be said that the low-temperature discharge characteristics (durability) are excellent. Note that the low temperature (-30°C) is a harsher environment than room temperature (25°C), and the load on the hydrogen storage material is larger. Thus, since the low-temperature discharge capacity is less than the room-temperature discharge capacity, the cycle characteristics at low temperatures are also presumed to be inferior to the room-temperature cycle characteristics.

### Comparative Example 1

Ni powder was not attached to the hydrogen storage alloy particles prepared in Example 1, and the hydrogen storage alloy particles were used, as they were, as the hydrogen storage material in Comparative Example 1. Table 2 shows the composition of the hydrogen storage material (substantially the same as the composition of the hydrogen storage alloy particles). In addition, Table 3 shows the results of conducting the X-ray diffractometry and the battery characteristic evaluation test in substantially the same manner as in Example 1. Further, Fig. 1 shows the X-ray diffraction pattern of the hydrogen storage material in Comparative Example 1, and Fig. 3 shows a 10,000 × SEM image under an electron microscope (trade name: JXA8800, manufactured by JEOL Ltd.).

### Comparative Example 2

The same procedure as in Example 1 was repeated, except that Ni powder was not mixed with the hydrogen storage alloy particles prepared in Example 1 and the heat treatment was carried out at 600°C for 3 h, to prepare a hydrogen storage material in Comparative Example 2. Table 2 shows the composition of the hydrogen storage material (substantially the same as the composition of the hydrogen storage alloy particles) and the heat treatment conditions. In addition, Table 3 shows the results of conducting the X-ray diffractometry and the battery characteristic evaluation test in substantially the same manner as in Example 1.

### Examples 2 to 28 and Comparative Examples 3 to 5 and 7 to 9

The same procedure as in Example 1 was repeated, except that the composition of hydrogen storage material, the composition of hydrogen storage alloy particles, the amount of the Ni powder, and the heat treatment conditions were changed as designated in Tables 1 and 2, to prepare a hydrogen storage material of each of Examples 2 to 28 or Comparative Examples 3 to 5 or 7 to 9. In this regard, however, instead of the Ni powder having an average particle size (D50) of 0.6 µm, Ni powder having a D50 of 2.4 µm was used in Example 19; Ni powder having a D50 of 2.0 µm was used in Example 20; and Ni powder having a D50 of 3.5 µm was used in Example 21. Table 3 shows the results of conducting the X-ray diffractometry and the battery characteristic evaluation test in substantially the same manner as in Example 1.

### Comparative Example 6

The same procedure as in Example 5 was repeated, except that the heat treatment at step (2) was not carried out, to prepare a hydrogen storage material in Comparative Example 6. Table 2 shows the composition of the hydrogen storage material, the composition of the hydrogen storage alloy particles, and the amount of the Ni powder. In addition, Table 3 shows the results of conducting the X-ray diffractometry and the battery characteristic evaluation test in substantially the same manner as in Example 1.

### Comparative Example 10

First, 1000 g of the hydrogen storage alloy particles prepared in Example 1 was immersed in 1000 g of hydrochloric acid solution at a pH of 1.0 without being mixed with Ni powder, and the mixture was stirred at 30°C for 10 min. Next, the mixture was washed with 0.3 wt% disodium hydrogen phosphate aqueous solution until the chlorine ion concentration became 5 × 10⁻⁶ mol/g or less, and then vacuum-dried at 60°C for 6 h to prepare a hydrogen storage material in Comparative Example 10. Table 2 shows the composition of the hydrogen storage material and the composition of the hydrogen storage alloy particles. In addition, Table 3 shows the results of conducting the X-ray diffractometry and the battery characteristic evaluation test in substantially the same manner as in Example 1.

### Comparative Example 11

First, 1000 g of the hydrogen storage alloy particles prepared in Example 1 was immersed in 2000 mL of 48% sodium hydroxide aqueous solution without being mixed with Ni powder, and the mixture was stirred at 90°C for 40 min. Next, this alkalitreated alloy powder was filtered, washed, and vacuum-dried at 60°C for 6 h to prepare a hydrogen storage material in Comparative Example 11. Table 2 shows the composition of the hydrogen storage material (substantially the same as the composition of the hydrogen storage alloy particles). In addition, Table 3 shows the results of conducting the X-ray diffractometry and the battery characteristic evaluation test in substantially the same manner as in Example 1. Note that the alkali treatment may cause elution of Al from the surface of the hydrogen storage alloy particles or may cause rare earth components to form, for instance, a hydroxide. However, the alkali treatment just causes a slight change in the surface composition, and does not essentially affect the composition of the entire particles.

Figs. 2 and 3 have demonstrated that the surface of the hydrogen storage material in Comparative Example 1 was in a smooth state; by contrast, part of the surface of the hydrogen storage material in Example 1 has microroughness due to attachment of the surface modifier. In addition, Fig. 1 and Table 3 have clearly demonstrated that the hydrogen storage material of the invention exhibited a specific X-ray diffraction pattern. This result has indicated a remarkable effect of improving the low-temperature discharge characteristics in a nickel hydrogen secondary battery. In particular, in Comparative Example 4 and Comparative Example 9, even though the relative intensity of the maximum peak P₁ was just slightly deviated from the range of 4.00% or higher, the low-temperature discharge characteristics were markedly poor. From this, it is clear that the numerical range of the relative intensity of the maximum peak P₁ has a critical significance.

**[Table 1]**

| | Composition of hydrogen storage material | Composition of hydrogen storage alloy particles | Amount of Ni powder with respect to 100 parts by mass of hydroge n storage alloy particles (parts by mass) | Heat treatment conditions at step (2) | |
|---|---|---|---|---|---|
| | | | | Heat treatment temperature (°C) | Heat treatment time (hr) |
| Example 1 | La_{0.14}Sm_{0.80}Zr_{0.02}Mg_{0.04}Ni_{3.35}Al_{0.24} | La_{0.14}Sm_{0.80}Zr_{0.02}Mg_{0.04}Ni_{3.26}Al_{0.24} | 1.5 | 650 | 3 |
| Example 2 | La_{0.14}Sm_{0.80}Zr_{0.02}Mg_{0.04}Ni_{3.31}Al_{0.24} | La_{0.14}Sm_{0.80}Zr_{0.02}Mg_{0.04}Ni_{3.26}Al_{0.24} | 0.8 | 750 | 3 |
| Example 3 | La_{0.14}Sm_{0.80}Zr_{0.02}Mg_{0.04}Ni_{3.32}Co_{0.02}Al_{0.24} | La_{0.14}Sm_{0.80}Zr_{0.02}Mg_{0.04}Ni_{3.26}Co_{0.02}Al_{0.24} | 1.0 | 600 | 3 |
| Example 4 | La_{0.14}Sm_{0.80}Zr_{0.02}Mg_{0.04}Ni_{3.35}Al_{0.24} | La_{0.14}Sm_{0.80}Zr_{0.02}Mg_{0.04}Ni_{3.26}Al_{0.24} | 1.5 | 600 | 3 |
| Example 5 | La_{0.14}Sm_{0.80}Zr_{0.02}Mg_{0.04}Ni_{3.6i}Al_{0.24} | La_{0.14}Sm_{0.80}Zr_{0.02}Mg_{0.04}Ni_{3.26}Al_{0.24} | 6.0 | 600 | 3 |
| Example 6 | La_{0.14}Sm_{0.80}Zr_{0.02}Mg_{0.04}Ni_{3.43}Al_{0.24} | La_{0.14}Sm_{0.80}Zr_{0.02}Mg_{0.04}Ni_{3.26}Al_{0.24} | 3.0 | 550 | 3 |
| Example 7 | La_{0.14}Sm_{0.80}Zr_{0.02}Mg_{0.04}Ni_{3.43}Al_{0.24} | La_{0.14}Sm_{0.80}Zr_{0.02}Mg_{0.04}Ni_{3.26}Al_{0.24} | 3.0 | 600 | 3 |
| Example 8 | La_{0.14}Sm_{0.80}Zr_{0.02}Mg_{0.04}Ni_{3.43}Al_{0.24} | La_{0.14}Sm_{0.80}Zr_{0.02}Mg_{0.04}Ni_{3.26}Al_{0.24} | 3.0 | 650 | 3 |
| Example 9 | La_{0.67}Y_{0.21}Mg_{0.12}Ni_{3.73}Al_{0.18} | La_{0.67}Y_{0.21}Mg_{0.12}Ni_{3.37}Al_{0.18} | 6.0 | 650 | 3 |
| Example 10 | La_{0.14}Sm_{0.80}Zr_{0.02}Mg_{0.04}Ni_{3.35}Al_{0.24} | La_{0.14}Sm_{0.80}Zr_{0.02}Mg_{0.04}Ni_{3.26}Al_{0.24} | 1.5 | 800 | 3 |
| Example 11 | La_{0.55}Pr_{0.06}Nd_{0.19}Mg_{0.20}Ni_{3.46}Al_{0.10} | La_{0.55}Pr_{0.06}Nd_{0.19}Mg_{0.20}Ni_{3.30}Al_{0.10} | 3.0 | 800 | 3 |
| Example 12 | La_{0.18}Nd_{0.34}Sm_{0.35}Zr_{0.03}Mg_{0.10}Ni_{3.39}Al_{0.17} | La_{0.18}Nd_{0.34}Sm_{0.35}Zr_{0.03}Mg_{0.10}Ni_{3.22}Al_{0.17} | 3.0 | 600 | 3 |
| Example 13 | La_{0.20}Nd_{0.37}Sm_{0.30}Zr_{0.02}Mg_{0.11}Ni_{3.44}Fe_{0.04}Al_{0.16} | La_{0.20}Nd_{0.37}Sm_{0.30}Zr_{0.02}Mg_{0.11}Ni_{3.20}Fe_{0.04}Al_{0.16} | 4.0 | 650 | 3 |
| Example 14 | La_{0.20}Nd_{0.37}Sm_{0.30}Zr_{0.02}Mg_{0.11}Ni_{3.36}Cu_{0.03}Si_{0.01}Al_{0.16} | La_{0.20}Nd_{0.37}Sm_{0.30}Zr_{0.02}Mg_{0.11}Ni_{3.20}Cu_{0.03}Si_{0.01}Al_{0.16} | 3.0 | 650 | 3 |
| Example 15 | La_{0.20}Nd_{0.37}Sm_{0.30}Zr_{0.02}Mg_{0.11}Ni_{3.27}Cr_{0.03}Al_{0.16} | La_{0.20}Nd_{0.37}Sm_{0.30}Zr_{0.02}Mg_{0.11}Ni_{3.21}Cr_{0.03}Al_{0.16} | 1.0 | 650 | 3 |
| Example 16 | La_{0.20}Nd_{0.37}Sm_{0.30}Zr_{0.02}Mg_{0.11}Ni_{3.27}Co_{0.05}Al_{0.16} | La_{0.20}Nd_{0.37}Sm_{0.30}Zr_{0.02}Mg_{0.11}Ni_{3.19}Co_{0.05}Al_{0.16} | 1.5 | 600 | 3 |
| Example 17 | La_{0.55}Sm_{0.17}Y_{0.03}Mg_{0.25}Ni_{3.23}Al_{0.10} | La_{0.55}Sm_{0.17}Y_{0.03}Mg_{0.25}Ni_{3.15}Al_{0.10} | 1.5 | 550 | 3 |
| Example 18 | La_{0.55}Pr_{0.06}Nd_{0.19}Mg_{0.20}Ni_{3.66} | La_{0.55}Pr_{0.06}Nd_{0.19}Mg_{0.20}Ni_{3.50} | 3.0 | 700 | 3 |
| Example 19 | La_{0.14}Sm_{0.80}Zr_{0.02}Mg_{0.04}Ni_{3.35}Al_{0.24} | La_{0.14}Sm_{0.80}Zr_{0.02}Mg_{0.04}Ni_{3.26}Al_{0.24} | 1.5 | 600 | 3 |
| Example 20 | La_{0.55}Y_{0.20}Mg_{0.25}Ni_{3.49}Al_{0.14} | La_{0.55}Y_{0.20}Mg_{0.25}Ni_{3.41}Al_{0.14} | 1.5 | 700 | 3 |
| Example 21 | La_{0.17}Pr_{0.023}Nd_{0.077}Sm_{0.56}Y_{0.02}Mg_{0.15}Ni_{3.20}Al_{0.20} | La_{0.19}Pr_{0.02}Nd_{0.08}Sm_{0.54}Y_{0.02}Mg_{0.15}Ni_{3.10}Al_{0.20} | 2.0 | 800 | 3 |
| Example 22 | La_{0.20}Nd_{0.38}Sm_{0.30}Zr_{0.02}Mg_{0.10}Ni_{3.30}Al_{0.17} | La_{0.20}Nd_{0.38}Sm_{0.30}Zr_{0.02}Mg_{0.10}Ni_{3.22}Al_{0.17} | 1.5 | 650 | 4 |
| Example 23 | La_{0.20}Nd_{0.38}Sm_{0.30}Zr_{0.02}Mg_{0.10}Ni_{3.30}Al_{0.17} | Lao.2oNdo.38Smo.3oZro.o2Mgo.ioNi₃.₂₂Alo.i7 | 1.5 | 700 | 4 |
| Example 24 | La_{0.20}Nd_{0.38}Sm_{0.30}Zr_{0.02}Mg_{0.10}Ni_{3.30}Al_{0.17} | Lao.2oNdo.38Smo.3oZro.o2Mgo.ioNi₃.₂₂Alo.i7 | 1.5 | 750 | 4 |
| Example 25 | La_{0.20}Nd_{0.38}Sm_{0.30}Zr_{0.02}Mg_{0.10}Ni_{3.39}Al_{0.17} | Lao.2oNdo.38Smo.3oZro.o2Mgo.ioNi₃.₂₂Alo.i7 | 3.0 | 650 | 6 |
| Example 26 | La_{0.50}Nd_{0.18}Sm_{0.18}Y_{0.02}Zr_{0.02}Mg_{0.10}Ni_{3.79}Al_{0.09} | La_{0.50}Nd_{0.18}Sm_{0.18}Y_{0.02}Zr_{0.02}Mg_{0.10}Ni_{3.6}iAl_{0.09} | 3.0 | 700 | 6 |
| Example 27 | La_{0.16}Nd_{0.36}Sm_{0.34}Zr_{0.02}Mg_{0.12}Ni_{3.49}Al_{0.16} | La_{0.16}Nd_{0.36}Sm_{0.34}Zr_{0.02}Mg_{0.12}Ni_{3.24}Al_{0.16} | 4.5 | 750 | 3 |
| Example 28 | La_{0.16}Nd_{0.36}Sm_{0.34}Zr_{0.02}Mg₀.₁₂Ni_{3.57}Al_{0.16} | La_{0.16}Nd_{0.36}Sm_{0.34}Zr_{0.02}Mg_{0.12}Ni_{3.24}Al_{0.16} | 6.0 | 750 | 3 |

**[Table 2]**

| | Composition of hydrogen storage material | Composition of hydrogen storage alloy particles | Amount of Ni powder with respect to 100 parts by mass of hydrogen storage alloy particles (parts by mass) | Heat treatment conditions at step (2) | |
|---|---|---|---|---|---|
| | | | | Heat treatment temperature (°C) | Heat treatment time (hr) |
| Comparative Example 1 | La_{0.14}Sm_{0.80}Zr_{0.02}Mg_{0.04}Ni_{3.26}Al_{0.24} | La_{0.14}Sm_{0.80}Zr_{0.02}Mg_{0.04}Ni_{3.26}Al_{0.24} | - | - | - |
| Comparative Example 2 | La_{0.14}Sm_{0.80}Zr_{0.02}Mg_{0.04}Ni_{3.26}Al_{0.24} | La_{0.14}Sm_{0.80}Zr_{0.02}Mg_{0.04}Ni_{3.26}Al_{0.24} | - | 600 | 3 |
| Comparative Example 3 | La_{0.14}Sm_{0.80}Zr_{0.02}Mg_{0.04}Ni_{3.75}Co_{0.02}Al_{0.24} | La_{0.14}Sm_{0.80}Zr_{0.02}Mg_{0.04}Ni_{3.26}Co_{0.02}Al_{0.24} | 7.5 | 600 | 3 |
| Comparative Example 4 | La_{0.14}Sm_{0.80}Zr_{0.02}Mg_{0.04}Ni_{3.43}Al_{0.24} | La_{0.14}Sm_{0.80}Zr_{0.02}Mg_{0.04}Ni_{3.26}Al_{0.24} | 3.0 | 500 | 3 |
| Comparative Example 5 | La_{0.14}Sm_{0.80}Zr_{0.02}Mg_{0.04}Ni_{3.43}Al_{0.24} | La_{0.14}Sm_{0.80}Zr_{0.02}Mg_{0.04}Ni_{3.26}Al_{0.24} | 3.0 | 985 | 3 |
| Comparative Example 6 | La_{0.14}Sm_{0.80}Zr_{0.02}Mg_{0.04}Ni_{3.6i}Al_{0.24} | La_{0.14}Sm_{0.80}Zr_{0.02}Mg_{0.04}Ni_{3.26}Al_{0.24} | 6.0 | - | - |
| Comparative Example 7 | La_{0.67}Y_{0.21}Mg_{0.12}Ni_{3.73}Al_{0.18} | La_{0.67}Y_{0.21}Mg_{0.12}Ni_{3.37}Al_{0.18} | 6.0 | 240 | 3 |
| Comparative Example 8 | La_{0.14}Sm_{0.80}Zr_{0.02}Mg_{0.04}Ni_{3.6i}Al_{0.24} | La_{0.14}Sm_{0.80}Zr_{0.02}Mg_{0.04}Ni_{3.26}Al_{0.24} | 6.0 | 450 | 3 |
| Comparative Example 9 | La_{0.14}Sm_{0.80}Zr_{0.02}Mg_{0.04}Ni_{3.29}Al_{0.24} | La_{0.14}Sm_{0.80}Zr_{0.02}Mg_{0.04}Ni_{3.26}Al_{0.24} | 0.5 | 600 | 3 |
| Comparative Example 10 | La_{0.14}Sm_{0.80}Zr_{0.02}Mg_{0.04}Ni_{3.36}Al_{0.24} | La_{0.14}Sm_{0.80}Zr_{0.02}Mg_{0.04}Ni_{3.26}Al_{0.24} | - | - | - |
| Comparative Example 11 | La_{0.14}Sm_{0.80}Zr_{0.02}Mg_{0.04}Ni_{3.26}Al_{0.24} | La_{0.14}Sm_{0.80}Zr_{0.02}Mg_{0.04}Ni_{3.26}Al_{0.24} | - | - | - |

**[Table 3]**

| | Relative intensity of each diffraction peak when the relative intensity of Pₘₐₓ is set to 100% | | | Battery characteristic evaluation test | | |
|---|---|---|---|---|---|---|
| | Relative intensity (%) of P₁ | Relative intensity (%) of P₂ | Relative intensity (%) of P₃ | Room-temperature (25°C) discharge capacity (mAh/g) | Low-temperature (-30°C) discharge capacity (mAh/g) | Room-temperature (25°C) cycle characteristics (%) |
| Example 1 | 18.59 | 22.07 | 1.42 | 320 | 193 | 91.6 |
| Example 2 | 7.08 | 44.20 | 0.50 | 322 | 130 | 92.0 |
| Example 3 | 10.97 | 43.90 | 0.10 | 322 | 141 | 91.0 |
| Example 4 | 12.36 | 32.65 | 2.21 | 318 | 186 | 90.2 |
| Example 5 | 15.26 | 44.82 | 4.62 | 277 | 136 | 89.7 |
| Example 6 | 26.68 | 43.58 | 5.30 | 297 | 155 | 90.7 |
| Example 7 | 25.57 | 35.55 | 3.31 | 293 | 177 | 89.0 |
| Example 8 | 14.38 | 41.76 | 2.82 | 299 | 187 | 88.4 |
| Example 9 | 57.64 | 29.04 | 5.98 | 265 | 155 | 88.6 |
| Example 10 | 9.25 | 23.10 | 0.01 | 324 | 135 | 91.4 |
| Example 11 | 11.78 | 14.85 | 0.80 | 321 | 175 | 88.8 |
| Example 12 | 13.12 | 45.10 | 0.75 | 327 | 170 | 92.5 |
| Example 13 | 13.89 | 42.95 | 1.20 | 320 | 170 | 92.0 |
| Example 14 | 13.78 | 43.96 | 0.65 | 325 | 178 | 92.3 |
| Example 15 | 12.10 | 45.95 | 0.00 | 338 | 147 | 93.1 |
| Example 16 | 12.90 | 46.10 | 1.10 | 332 | 186 | 91.5 |
| Example 17 | 14.82 | 43.20 | 1.95 | 345 | 198 | 87.2 |
| Example 18 | 12.95 | 15.94 | 0.40 | 327 | 187 | 90.2 |
| Example 19 | 11.89 | 34.10 | 1.10 | 318 | 194 | 90.2 |
| Example 20 | 4.52 | 28.10 | 0.71 | 355 | 195 | 87.6 |
| Example 21 | 4.60 | 29.10 | 0.40 | 335 | 176 | 93.8 |
| Example 22 | 9.50 | 55.00 | 1.05 | 342 | 150 | 92.5 |
| Example 23 | 10.60 | 51.00 | 0.05 | 343 | 174 | 92.3 |
| Example 24 | 7.00 | 47.00 | 0.00 | 344 | 165 | 91.8 |
| Example 25 | 12.35 | 46.25 | 0.65 | 335 | 180 | 91.4 |
| Example 26 | 14.50 | 45.60 | 0.55 | 328 | 165 | 90.8 |
| Example 27 | 32.90 | 33.00 | 0.00 | 315 | 121 | 91.8 |
| Example 28 | 67.00 | 30.00 | 0.00 | 295 | 109 | 92.2 |
| Comparative Example 1 | 3.51 | 50.94 | 0.20 | 323 | 36 | 93.3 |
| Comparative Example 2 | 3.33 | 52.19 | 0.00 | 347 | 4 | 93.9 |
| Comparative Example 3 | 16.17 | 52.85 | 7.02 | 245 | 109 | 86.0 |
| Comparative Example 4 | 3.88 | 48.43 | 4.94 | 308 | 11 | 91.3 |
| Comparative Example 5 | 2.78 | 46.98 | 0.18 | 320 | 235 | 84.5 |
| Comparative Example 6 | 0.00 | 51.90 | 9.10 | 308 | 6 | 92.5 |
| Comparative Example 7 | 3.30 | 49.56 | 9.07 | 301 | 15 | 90.0 |
| Comparative Example 8 | 1.98 | 47.67 | 7.15 | 307 | 4 | 91.1 |
| Comparative Example 9 | 3.91 | 43.20 | 0.00 | 322 | 65 | 92.1 |
| Comparative Example 10 | 2.77 | 46.46 | 0.34 | 315 | 98 | 90.5 |
| Comparative Example 11 | 3.20 | 51.90 | 0.22 | 317 | 72 | 91.1 |

## Claims

1. A hydrogen storage material comprising hydrogen storage alloy particles and a surface modifier attached to a surface of the particles,
the surface modifier comprising Ni,
the hydrogen storage material having a composition represented by formula (1):
R₁₋ₐMgₐNi_{b}Al_{c}M_{d} · · · (1)
where R represents at least one element selected from the group consisting of rare earth elements, Zr, Hf, and Ca, M represents at least one element selected from the group consisting of Ti, V, Nb, Ta, Cr, Mo, W, Mn, Fe, Co, Cu, Zn, B, Ga, Sn, Sb, In, C, Si, and P, and a is 0.005 ≤ a ≤ 0.40, b is 3.00 ≤ b ≤ 4.50, c is 0 ≤ c ≤ 0.50, d is 0 ≤ d ≤ 1.00, and b + c + d is 3.00 ≤ b + c + d ≤ 4.50,
wherein in an X-ray diffraction pattern of the hydrogen storage material as obtained by X-ray diffractometry using a Cu-Ka beam as an X-ray source, when a relative intensity of maximum peak Pₘₐₓ among diffraction peaks appearing in a range of 2θ = 42.00 degrees to 44.00 degrees is set to 100.00%, a relative intensity of maximum peak P₁ appearing in a range of 2θ = 30.35 degrees to 30.65 degrees is from 4.00% to 70.00%, a relative intensity of maximum peak P₂ appearing in a range of 2θ = 32.85 degrees to 33.15 degrees is less than 60.00%, and a relative intensity of maximum peak P₃ appearing in a range of 2θ = 51.65 degrees to 51.95 degrees is less than 6.00%.

2. A hydrogen storage material comprising hydrogen storage alloy particles and a surface modifier attached to a surface of the particles,
the surface modifier comprising Ni,
the hydrogen storage material having a composition represented by formula (1):
R₁₋ₐMgₐNi_{b}Al_{c}M_{d} · · · (1)
where R represents at least one element selected from the group consisting of rare earth elements, Zr, Hf, and Ca, M represents at least one element selected from the group consisting of Ti, V, Nb, Ta, Cr, Mo, W, Mn, Fe, Co, Cu, Zn, B, Ga, Sn, Sb, In, C, Si, and P, and a is 0.005 ≤ a ≤ 0.40, b is 3.00 ≤ b ≤ 4.50, c is 0 ≤ c ≤ 0.50, d is 0 ≤ d ≤ 1.00, and b + c + d is 3.00 ≤ b + c + d ≤ 4.50,
wherein in an X-ray diffraction pattern of the hydrogen storage material as obtained by X-ray diffractometry using a Cu-Ka beam as an X-ray source, when a relative intensity of maximum peak Pₘₐₓ among diffraction peaks appearing in a range of 2θ = 42.00 degrees to 44.00 degrees is set to 100.00%, a relative intensity of maximum peak P₁ appearing in a range of 2θ = 30.35 degrees to 30.65 degrees is from 5.00% to 60.00% and a relative intensity of maximum peak P₂ appearing in a range of 2θ = 32.85 degrees to 33.15 degrees is less than 50.00%.

3. The hydrogen storage material according to claim 1 or 2, wherein the relative intensity of the maximum peak P₃ is less than 5.00%.

4. The hydrogen storage material according to any one of claims 1 to 3, wherein the surface modifier comprises a Ni compound.

5. The hydrogen storage material according to any one of claims 1 to 4, wherein the hydrogen storage alloy particles have a composition represented by formula (2):
R_{1-w}Mg_{w}NiₓAl_{y}M_{z} · · · (2)
where R represents at least one element selected from the group consisting of rare earth elements, Zr, Hf, and Ca, M represents at least one element selected from the group consisting of Ti, V, Nb, Ta, Cr, Mo, W, Mn, Fe, Co, Cu, Zn, B, Ga, Sn, Sb, In, C, Si, and P, and w is 0.005 ≤ w ≤ 0.40, x is 2.70 ≤ x ≤ 4.20, y is 0 ≤ y ≤ 0.50, z is 0 ≤ z ≤ 1.00, and x + y + z is 2.70 ≤ x + y + z ≤ 4.20.

6. A negative electrode active material for a nickel hydrogen secondary battery, comprising the hydrogen storage material according to any one of claims 1 to 5.

7. A negative electrode for a nickel hydrogen secondary battery, comprising the negative electrode active material according to claim 6.

8. A nickel hydrogen secondary battery comprising the negative electrode according to claim 7.
